# EUROPEAN PATENT SPECIFICATION

(11) **EP 2 987 970 B1**
(45) Date of publication and mention of the grant of the patent: **24.05.2017**
(21) Application number: 15175871.1
(22) Date of filing: 08.07.2015
(51) Int. Cl.: F01K 7/22, F01K 7/32, F01K 7/40, F01K 25/10

(54) **HYBRID POWER GENERATION SYSTEM AND METHOD USING SUPERCRITICAL CO2 CYCLE**
HYBRIDES STROMERZEUGUNGSSYSTEM UND VERFAHREN UNTER VERWENDUNG VON SUPERKRITISCHEM CO2-ZYKLUS
SYSTÈME DE GÉNÉRATION D'ÉNERGIE HYBRIDE ET PROCÉDÉ UTILISANT UN CYCLE CO2 SUPERCRITIQUE

(30) Priority: 14.07.2014 KR 20140088571
(43) Date of publication of application: 24.02.2016
(73) Proprietor: Doosan Heavy Industries & Construction Co., Ltd., Seongsan-gu Changwon, Gyeongnam 642-792 (KR)
(72) Inventor: KANG, Sung Gju, 645-280 Gyeongsangnam-do (KR); KIM, Young Oon, 642-766 Gyeongsangnam-do (KR); CHI, Hyung Keun, 540-180 Jeollanam-do, (KR); HWANG, Jeong Ho, 704-963 Daegu (KR)
(74) Representative: Ter Meer Steinmeister & Partner

(56) References cited:
- WO-A1-2014/194400
- US-A1- 2013 145 759

## Description

Exemplary embodiments of the present invention relate to a hybrid power generation system using a supercritical CO₂ cycle, and more particularly, to a hybrid power generation system using a supercritical CO₂ cycle, which realizes optimal efficiency by applying a supercritical CO₂ cycle to a steam cycle as a bottom cycle.

A need to efficiently produce electric power is gradually increased since Korea significantly depends on imported energy sources and constantly suffers from a severe electric power shortage every summer and winter. Moreover, various efforts have been performed in order to reduce generation of pollutants and increase electric power production since activities for reducing generation of pollutants are internationally increased. One of them is a study on a power generation system using supercritical CO₂, which utilizes supercritical carbon dioxide as a working fluid, as disclosed in Korean Patent Laid-Open Publication No. 2013-0036180. Lately published Application Patent Publication WO2014/194400 describes a hybrid power generation system comprising a supercritical CO2 power generation unit and a steam power generation unit wherein in the steam power power generation unit, steam is produced/heated in a boiler and wherein in the supercritical CO2 power generation unit, supercritical CO2 is heated by condensate from the boiler exhaust gases or steam extracted from the steam power generation unit.

The supercritical carbon dioxide simultaneously has a density similar to that of liquid and a viscosity similar to that of gas, thereby enabling the system to be miniaturized and the electric power required for compression and circulation of the fluid to be minimally consumed. In addition, it is easy to handle the supercritical carbon dioxide since the supercritical carbon dioxide has a smaller critical point of 31.4°C and 72.8 atmospheres, compared to water having a critical point of 373.95°C and 217.7 atmospheres. When the power generation system using supercritical CO₂ is operated at the temperature of 550°C, the system may have about 45% of net power generation efficiency, which is an improved power generation efficiency of 20% or more, compared to an existing steam cycle and the size of a turbo device may be reduced to one several tenth. In addition, the power generation system using supercritical CO₂ is mostly operated as a closed cycle which does not discharge the carbon dioxide used for power generation to the outside, thereby significantly contributing to a reduction of pollutant discharge for each country.

However, since it is difficult for the existing power generation system using supercritical CO₂ to have a large size more than a certain magnitude, the system may supply only a portion of necessary electric power. In addition, there is a need to efficiently increase electric power production and reduce discharge of pollutants in a coal-fired thermal power generation system.

Accordingly, in order to resolve these problems, there is a need to improve the power generation system using supercritical CO₂ and the coal-fired thermal power generation system and to efficiently enhance electric power production.

### [Related Art Document]

[Patent Document] Korean Patent Laid-Open Publication No. 2013-0036180 (April 11, 2013)

### BRIEF SUMMARY

An object of the present invention is to provide a hybrid power generation system using a supercritical CO₂ cycle, which realizes optimal efficiency by applying a supercritical CO₂ cycle to a steam cycle as a bottom cycle.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with one aspect of the present invention, a hybrid power generation system using a supercritical CO₂ cycle includes a steam power generation unit including a plurality of turbines driven with steam heated by a boiler to produce electric power, and a supercritical CO₂ power generation unit including an S-CO₂ heater for heating a supercritical CO₂ fluid, a turbine driven by the supercritical CO₂ fluid, a precooler for lowering a temperature of the supercritical CO₂ fluid passing through the turbine, and a main compressor for pressurizing the supercritical CO₂ fluid, so as to produce electric power, wherein the steam power generation unit and the supercritical CO₂ power generation unit share the boiler.

The steam power generation unit may further include a plurality of feed water heaters for reheating the steam driving the turbines, a plurality of outside air injectors for supplying outside air to the boiler, a gas air heater (GAH) for recovering waste heat from combustion gas discharged after burning by the boiler, and an exhaust gas ejector for discharging exhaust gas passing through the gas air heater.

The supercritical CO₂ power generation unit may further include a recompressor driven by the supercritical CO₂ fluid branched before introduction into the precooler, a first high-recuperator installed between the turbine and the recompressor, and a second low-recuperator installed between the recompressor and the main compressor.

The S-CO₂ heater may be installed in the boiler.

The boiler may further include a steam superheater for superheating the steam and a steam reheater for reheating the steam supplied from the turbine, and the S-CO₂ heater may be installed in a front end part of the steam superheater and the steam reheater.

The supercritical CO₂ power generation unit may further include an S-CO₂ gas cooler for recovering waste heat from the exhaust gas between the gas air heater and the exhaust gas ejector.

The S-CO₂ gas cooler may be connected to the second low-recuperator and the first high-recuperator, and the supercritical CO₂ fluid may be compressed by the main compressor, be exchanged with heat by the S-CO₂ gas cooler via the second low-recuperator, and then be introduced into the first high-recuperator.

The supercritical CO₂ power generation unit may further include an air preheater for recovering waste heat from the precooler, and the air preheater may be connected to the outside air injectors and the gas air heater.

The supercritical CO₂ power generation unit may further include an S-CO₂ feed water heater connected to one of the feed water heaters so as to heat the supercritical CO₂ fluid passing through the second low-recuperator using heat recovered from the feed water heater.

The S-CO₂ feed water heater may have an outlet end connected to the precooler so that the supercritical CO₂ fluid passing through the S-CO₂ feed water heater is introduced into the precooler.

The supercritical CO₂ power generation unit may further include an S-CO₂ air heater provided between the gas air heater and the air preheater so as to be connected to the gas air heater and the air preheater.

The S-CO₂ air heater may be connected to the first high-recuperator and the second low-recuperator, and heat outside air passing through the air preheater.

In accordance with another aspect of the present invention, a hybrid power generation method using a supercritical CO₂ cycle includes a steam cycle for producing electric power by a steam power generation unit and a supercritical CO₂ cycle for producing electric power by a supercritical CO₂ power generation unit, wherein the supercritical CO₂ cycle includes performing fluid heating in which a supercritical CO₂ fluid is heated using an S-CO₂ heater of the supercritical CO₂ power generation unit provided in a boiler of the steam power generation unit, performing turbine driving in which a turbine is driven by the heated supercritical CO₂ fluid, performing first heat exchange in which the supercritical CO₂ fluid passing through the turbine is exchanged with heat by a first high-recuperator, performing second heat exchange in which the supercritical CO₂ fluid exchanged with heat by the first high-recuperator is exchanged with heat by a second low-recuperator , performing cooling in which the supercritical CO₂ fluid after the performing second heat exchange is cooled by a precooler, performing compression in which the supercritical CO₂ fluid cooled through the performing cooling is supplied to and compressed by a main compressor, performing third heating in which the compressed supercritical CO₂ fluid is heated via the second low-recuperator, performing fourth heating in which the supercritical CO₂ fluid passing through the second low-recuperator is heated via the first high-recuperator, and performing circulation in which the supercritical CO₂ fluid after the performing fourth heating is circulated to the S-CO₂ heater.

The supercritical CO₂ cycle may further include performing recovery cooling, in which the supercritical CO₂ fluid after the performing second heat exchange is introduced into an S-CO₂ feed water heater to be cooled by recovering heat from a feed water heater of the steam power generation unit, between the performing second heat exchange and the performing cooling.

The supercritical CO₂ cycle may further include performing auxiliary heating, in which the supercritical CO₂ fluid after the performing third heating is heated via an S-CO₂ gas cooler for recovering waste heat from exhaust gas discharged from the boiler and then proceeds to the performing fourth heating, between the performing third heating and the performing fourth heating.

The supercritical CO₂ cycle may further include performing recompressor driving, in which a portion of the supercritical CO₂ fluid introduced into the S-CO₂ feed water heater is branched to drive a recompressor, between the performing second heating and the performing recovery cooling.

The steam cycle includes performing preheating in which outside air used to burn fuel is heated by recovering waste heat from the precooler through an air preheater installed at the precooler, performing combustion in which fuel is injected and burned in the boiler, performing turbine driving in which steam is heated with heat generated through the performing combustion and drives a plurality of turbines, and performing exhaust gas discharge in which combustion gas generated by the boiler is discharged to the outside.

The steam cycle may further include performing heat recovery, in which waste heat is recovered from the exhaust gas by the S-CO₂ gas cooler, prior to the performing exhaust gas discharge.

The steam cycle may further include performing additional heating, in which the outside air after the performing preheating is additionally heated by an S-CO₂ air heater, between the performing preheating and the performing combustion.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram illustrating a hybrid power generation system using a supercritical CO₂ cycle according to a first embodiment of the present invention;
Fig. 2 is a block diagram illustrating a hybrid power generation system using a supercritical CO₂ cycle according to a second embodiment of the present invention;
Fig. 3 is a block diagram illustrating a hybrid power generation system using a supercritical CO₂ cycle according to a third embodiment of the present invention; and
Fig. 4 is a graph illustrating a T-S relation in the hybrid power generation system according to the third embodiment of the present invention.

### DESCRIPTION OF SPECIFIC EMBODIMENTS

A hybrid power generation system using a supercritical CO₂ cycle according to exemplary embodiments of the present invention will be described below in more detail with reference to the accompanying drawings. For convenience' sake, like reference numerals will refer to like components throughout the various figures and embodiments of the present invention, and redundant description thereof will be omitted. In addition, inlet and outlet ends through which fluids are introduced into or discharged from the respective components and pipes connecting the components will be designated by reference numerals, and only respective points required to describe the embodiments of the present invention will be described using reference numerals.

A hybrid power generation system using a supercritical CO₂ cycle according to the present invention is a hybrid power generation system capable of improving both efficiencies of two power generation system by means of using a coal-fired thermal power generation system as a bottom cycle and using a power generation system using supercritical CO₂ as a topping cycle.

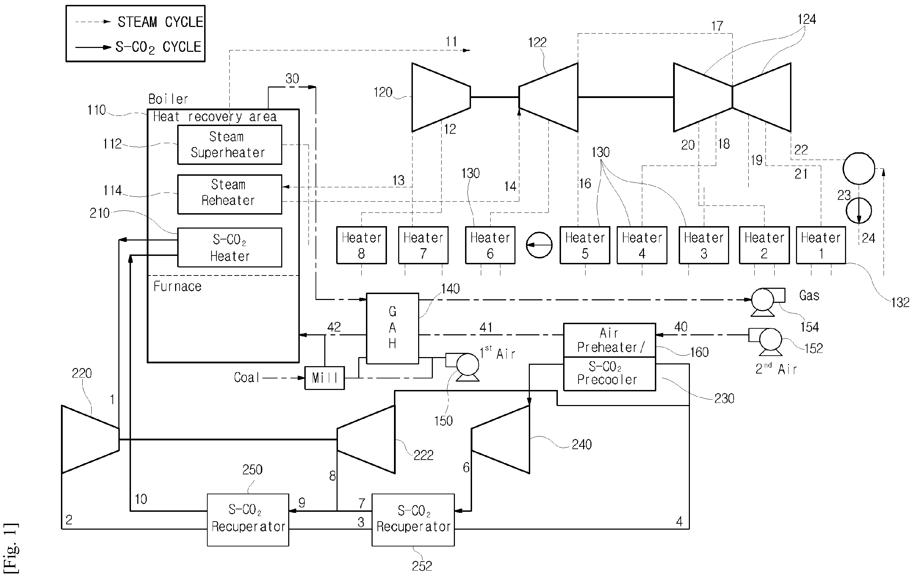

First, the bottom cycle according to the exemplary embodiments of the present invention will be described with reference to Figs. 1 to 3.

The bottom cycle of the present invention is a steam cycle in which fossil fuel such as coal are supplied to and burned in a boiler 110 and water is converted into steam through supply of thermal energy generated by the boiler 110 to a steam generator (not shown). The steam is supplied to a first turbine 120 and a second turbine 122 through a steam pipe. After the first and second turbines 120 and 122 are operated, the steam is reheated by a plurality of feed water heaters 130 to be supplied to a third turbine 124, and is then cooled by a steam condenser (not shown) to be recovered as water again. Air used to burn the fossil fuel is supplied from the outside of the steam cycle. The supplied outside air is used to burn the fuel and is then discharged to the outside of the cycle after a portion of waste heat is recovered from the outside air.

Hereinafter, a steam power generation unit including each component constituting the above-mentioned steam cycle will be described.

The boiler 110 is provided with a steam superheater 112 which makes the steam supplied from the feed water heaters 130 as superheated steam and a steam reheater 114 which reheats the steam supplied from the first turbine 120. The combustion gas burned by the boiler 110 passes through a gas air heater (GAH) 140 and is then discharged to the outside of the system after waste heat is recovered from the combustion gas. Outside air introduced from the outside to burn the fuel by the boiler 110 is preheated and supplied while passing through the gas air heater 140. The outside air may be introduced through a plurality of paths. The present invention proposes an example in which a first outside air injector 150 and a second outside air injector 152 are used to supply the outside air to the steam cycle.

Fig. 1 is a block diagram illustrating a hybrid power generation system using a supercritical CO₂ cycle according to a first embodiment of the present invention.

As shown in Fig. 1, the hybrid power generation system using a supercritical CO₂ cycle according to the first embodiment of the present invention is a hybrid power generation system configured of the above-mentioned steam cycle and a supercritical CO₂ cycle, and the two cycles share the boiler 110.

That is, the boiler 110 of the steam power generation unit is provided with a supercritical CO₂ heater (hereinafter, referred to as "S-CO₂ heater") 210 which is a component of a supercritical CO₂ unit, so that a supercritical CO₂ fluid passes through the boiler 110 and is circulated in the supercritical CO₂ cycle.

The supercritical CO₂ unit according to the first embodiment of the present invention includes an S-CO₂ heater 210 which heats the high-pressure supercritical CO₂ fluid as a working fluid to an optimal process temperature, a turbine 220 which is driven by the supercritical CO₂ fluid passing through the S-CO₂ heater 210, a precooler 230 which lowers a temperature of the high-temperature and low-pressure supercritical CO₂ fluid passing through the turbine 220, and a main compressor 240 which pressurizes the low-temperature and low-pressure supercritical CO₂ fluid to 200 atmospheres or more. In addition, the supercritical CO₂ cycle may further include a recompressor 222 which is driven by the low-temperature and low-pressure supercritical CO₂ fluid branched before introduction into the precooler 230, and a first high-recuperator 250 and a second low-recuperator 252 which are respectively installed between the turbine 220 and the recompressor 222 and between the recompressor 222 and the main compressor 240. Here, the high or low temperature in the present invention means only a relatively high or low temperature in connection with other points in the cycle, and does not mean an absolute temperature value. The above components form a closed cycle. Since the supercritical CO₂ fluid is circulated in the closed cycle, the closed cycle is referred to as a supercritical CO₂ cycle.

The first high-recuperator 250 serves to lower the temperature of the supercritical CO₂ fluid discharged from the turbine 220 and raise the temperature of the supercritical CO₂ fluid introduced into the S-CO₂ heater 210, through heat exchange. Similarly, the second low-recuperator 252 also serves to lower the temperature of the supercritical CO₂ fluid introduced into the main compressor 240 and raise the temperature of the supercritical CO₂ fluid discharged from the main compressor 240, through heat exchange.

Thus, the supercritical CO₂ fluid from the S-CO₂ heater 210 to an inlet end of the second low-recuperator 252 (1 ∼ 3) is in a high-temperature state (is a high-temperature), and the supercritical CO₂ fluid from an outlet end of the second low-recuperator 252 to the main compressor 240 (4 ∼ 5) is in a relatively low-temperature state (is a low-temperature fluid). In addition, the supercritical CO₂ fluid from an outlet end of the main compressor 240 to an inlet end of the first high-recuperator 250 (6 ∼ 9) is in a low-temperature state (is a low-temperature fluid), and the supercritical CO₂ fluid from an outlet end of the first high-recuperator 250 to an inlet end of the S-CO₂ heater 210 (10) is in a relatively high-temperature state (is a high-temperature fluid).

Recompression efficiency of the supercritical CO₂ cycle may be improved in such a manner that a portion of the supercritical CO₂ fluid before introduction into the precooler 230 is branched to the recompressor 222.

The S-CO₂ heater 210 is preferably installed in a high-temperature part in the boiler 110. In a case in which the S-CO₂ heater 210 is used alone, heat discarded from the precooler 230 is decreased as a recompression ratio is increased while the supercritical CO₂ fluid is circulated in the cycle. Consequently, the efficiency of the system is increased. However, when the recompression ratio exceeds a certain ratio, the inlet end 10 of the turbine 220 has a higher temperature than the outlet end 2 of the turbine 220 and thus it is in a state in which the heat is transferred from the low temperature to the high temperature. For this reason, since the supercritical CO₂ fluid is impossible to be normally circulated, the system may not be normally maintained. Thus, when the S-CO₂ heater 210 is installed in the high-temperature part in the boiler 110, the temperature of the outlet end 2 of the turbine 220 is always maintained to be higher than that of the inlet end 10. Therefore, the supercritical CO₂ cycle may be normally maintained even though the recompression ratio is increased.

In addition, since a cementation phenomenon in which carbon dioxide reacts with metal and carbon is penetrated into the metal is generated in the supercritical CO₂ cycle, the pipe should be made of a high-quality material such as nickel. However, such a disadvantage acts as an advantage in the hybrid power generation system using a supercritical CO₂ cycle since the temperature of the supercritical CO₂ fluid may be set to be higher than a steam temperature in the steam cycle.

In more detail, heat transfer in the boiler 110 is subject to external heat transfer. Accordingly, entropy according to heat transfer is increased as a temperature difference between a fluid and a wall through which the fluid flows is increased. Therefore, the entropy is decreased by decreasing the temperature difference between the fluid and the wall through which the fluid flows, thereby enabling the efficiency of the power generation system to be enhanced.

When the S-CO₂ heater 210 is installed in a front end part, which is a position before the steam superheater 112 of the boiler 110 is installed, namely, in the high-temperature part, the supercritical CO₂ fluid circulated to the S-CO₂ heater 210 has a higher temperature than the steam supplied to the high-temperature part of the boiler 110. Therefore, the temperature of the steam may be increased by a temperature increase in the vicinity of the steam pipe. Consequently, a temperature difference between high-temperature exhaust gas and the steam circulated through the steam pipe may be reduced, and thus an entropy loss to the inlet of the first turbine 120 may be reduced so as to improve the efficiency of the power generation system.

That is, it may be possible to improve both of efficiencies of the steam cycle and the supercritical CO₂ cycle by installing the S-CO₂ heater 210 in the high-temperature part in the boiler 110.

Meanwhile, an air preheater 160 may be mounted to the precooler 230. The precooler 230 serves to lower the temperature of the supercritical CO₂ fluid introduced into the main compressor 240 to reduce a load of the main compressor 240, so as to improve compression efficiency thereof. Therefore, when the supercritical CO₂ cycle is configured alone, heat discarded from the precooler 230 is discharged, as it is, to the outside of the cycle. However, since the air preheater 160 is mounted to the precooler 230 in the present invention, the precooler 230 may recover and use waste heat for outside air preheating in the steam cycle. Thus, the steam cycle may have high efficiency by means of using the waste heat discarded from the precooler 230.

Although an example in which the air preheater is mounted to the precooler in the first embodiment of the present invention has been described, the precooler may also be mounted to a first feed water heater 132 of the steam cycle without provision of the air preheater.

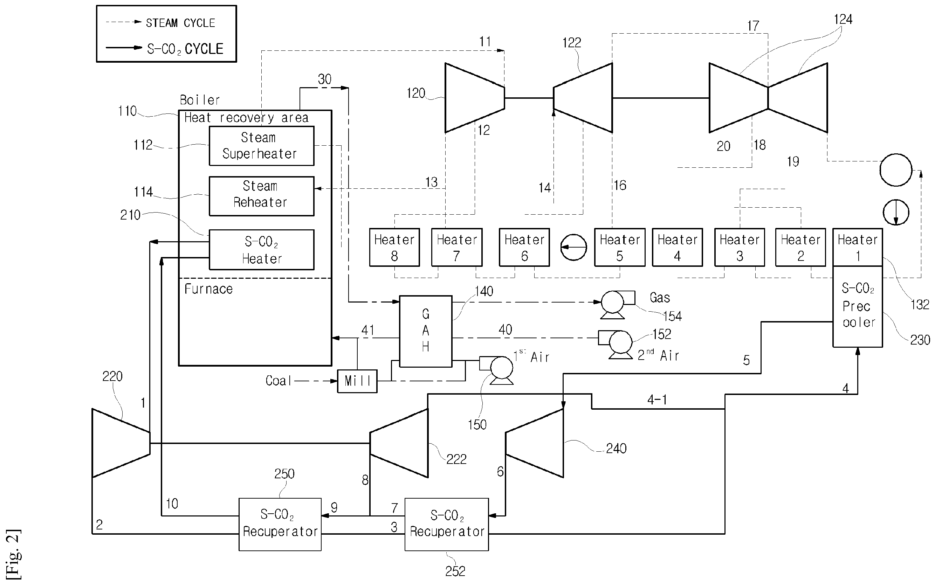

Fig. 2 is a block diagram illustrating a hybrid power generation system using a supercritical CO₂ cycle according to a second embodiment of the present invention.

As shown in Fig. 2, in the hybrid power generation system using a supercritical CO₂ cycle according to the second embodiment of the present invention, a precooler 230 may be mounted to the first feed water heater 132 of the steam power generation unit. The waste heat is recovered from the precooler 230 by the first feed water heater 132 to be used in the steam cycle, and the supercritical CO₂ fluid passing through the precooler 230 is cooled and supplied to a main compressor 240.

However, since there is a limit to a waste heat capacity of the precooler 230 capable of being recovered by the air preheater 160 of the first embodiment or the first feed water heater 132 of the second embodiment, remaining waste heat should be entirely discharged from the precooler 230 when the waste heat is left at a ratio equal to or greater than a certain capacity. When the waste heat discharged from the precooler 230 has a ratio equal to or greater than a certain capacity, a heat transfer area is separately added to the steam condenser (not shown). In this case, since a power generation ratio of the supercritical CO₂ cycle having relatively high efficiency is increased even though cost is added, the entire efficiency of the hybrid power generation system is increased.

A third embodiment of the present invention is an optimal embodiment capable of maximizing efficiencies of the steam cycle and the supercritical CO₂ cycle compared to the first and second embodiments, and detailed description thereof will be given as follows.

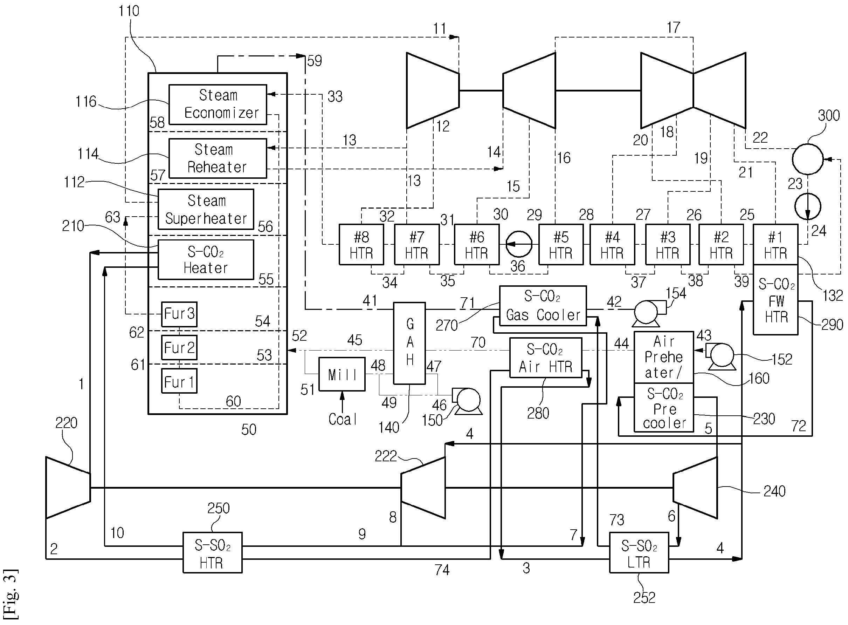

Fig. 3 is a block diagram illustrating a hybrid power generation system using a supercritical CO₂ cycle according to the third embodiment of the present invention.

As shown in Fig. 3, the second outside air injector 152 of the steam power generation unit is provided with a precooler 230 and an air preheater 160, and the first feed water heater 132 of the steam power generation unit is provided with an S-CO₂ feed water heater 290 connected to an outlet end 4 of a second low-recuperator 252 of the supercritical CO₂ cycle. The outlet end 71 of the gas air heater 140 of the steam cycle is provided with an S-CO₂ gas cooler 270, and an S-CO₂ air heater 280 is provided between the air preheater 160 and the gas air heater 140.

The high-temperature supercritical CO₂ fluid, which is circulated to the S-CO₂ heater 210 installed in the boiler 110 of the steam cycle, drives the turbine 220, and is then discharged, exchanges heat with outside air introduced through the air preheater 160 while passing through the S-CO₂ air heater 280 via a first high-recuperator 250, and is then introduced into the second low-recuperator 252. The low-temperature and low-pressure supercritical CO₂ fluid passing through the second low-recuperator 252 is introduced and reheated in the S-CO₂ feed water heater 290, is cooled while passing through the precooler 230, and is then supplied to the main compressor 240. The supercritical CO₂ fluid compressed to high pressure by the main compressor 240 is heated again via the second low-recuperator 252 and the first high-recuperator 250, and is then introduced into the S-CO₂ heater 210 to be heated at high temperature.

Since heat discarded from the precooler 230 has a low temperature and the steam cycle is a small cooling cycle, a capacity ratio of heat capable of being recovered is low. Therefore, a heat transfer area should be separately added to a steam condenser 300 when the heat has a ratio equal to or greater than about 15% of capacity of the steam cycle. Thus, an S-CO₂ capacity ratio should be calculated in consideration of economic feasibility. However, when the separate heat transfer area is added to the steam condenser 300, the steam cycle should be arranged such that heat is maximally recovered in consideration of relative fluid conditions between the S-CO₂ feed water heater 290 and the precooler 230. Fig. 3 shows an arrangement example in which an inlet air temperature of the precooler 230 is lower than an inlet feed water temperature of the S-CO₂ feed water heater 290. In this case, when the supercritical CO₂ fluid which is primarily cooled through the S-CO₂ feed water heater 290 is supplied to the precooler 230, the temperature of the supercritical CO₂ fluid may be more efficiently lowered. On the other hand, when the inlet air temperature of the precooler 230 is higher than the inlet feed water temperature of the S-CO₂ feed water heater 290, it is preferable that the supercritical CO₂ fluid first passes through the precooler 230.

The supercritical CO₂ fluid compressed to low-temperature and high-pressure by the main compressor 240 is introduced into the S-CO₂ gas cooler 270 via the second low-recuperator 252.

When high moisture coal is used and burned in the boiler 110, a heat absorption ratio is decreased while a gas temperature in the boiler 110 is decreased and thus exhaust gas at the discharge end 59 of the boiler 110 has increased sensible heat. However, the sensible heat is sufficiently absorbed since the heat transfer area is limited. For this reason, since the temperature of the discharged exhaust gas is rather increased in spite of decrease of temperature in the boiler 110, a phenomenon in which the efficiency of the boiler 110 is reduced is generated. The supercritical CO₂ fluid is preheated in a process of heating the supercritical CO₂ fluid to high temperature by recovering the sensible heat of the discharged exhaust gas through the S-CO₂ gas cooler 270. Consequently, the first high-recuperator 250 may have a reduced load, and the temperature of the exhaust gas discharged from the boiler 110 for burning high moisture coal may be prevented from increasing.

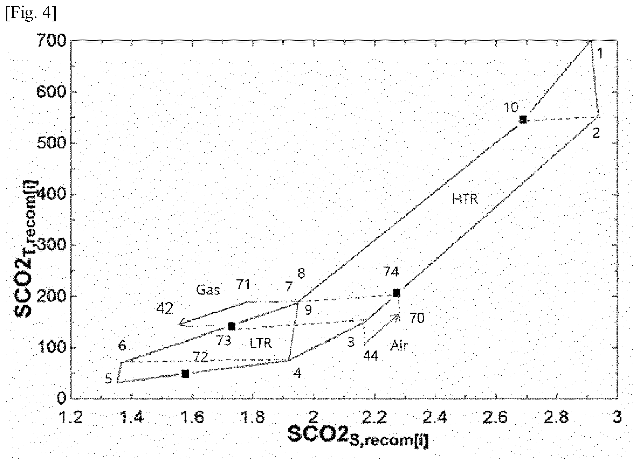

Fig. 4 is a graph illustrating a T-S relation in the hybrid power generation system according to the third embodiment of the present invention.

As shown in Fig. 4, in the relation of a temperature T and a specific heat capacity S of the supercritical CO₂ fluid, it may be seen that a temperature difference between a low-temperature fluid and a high-temperature fluid is properly maintained at 5 to 10°C in the first high-recuperator 250 and the second low-recuperator 252 in the hybrid power generation system according to the present invention. Thus, it may be possible to maximize the efficiencies of the first high-recuperator 250 and the second low-recuperator 252 and to prevent an excess increase of the heat transfer area.

In addition, an existing section (points from 73 to 7) in which heating is impossible since the high-temperature fluid has a low temperature may be heated using exhaust gas discharged from the boiler 110, namely, heat of exhaust gas may be recovered from the S-CO₂ gas cooler 270. Thus, as shown in Fig. 4, it may be seen that the temperature of the exhaust gas is lowered from 200°C to 143°C and the temperature difference is properly maintained. It may be possible to exclude a risk of low-temperature corrosion since the temperature of the exhaust gas is maintained at a temperature equal to or greater than an acid dew point,

In Fig. 4, it may be seen that waste heat discarded from the precooler 230 is supplied to the boiler 110 through the air preheater 160 and is used to burn fuel (points from 44 to 70).

As describe above, the hybrid power generation system using a supercritical CO₂ cycle according to the embodiments of the present invention constitutes an optimal system by interconnecting the steam cycle and the supercritical CO₂ cycle, thereby improving both of efficiencies of the steam cycle and the supercritical CO₂ cycle.

A hybrid power generation method according to a fluid flow in the hybrid power generation system using a supercritical CO₂ cycle according to the embodiments of the present invention having the above-mentioned configuration will be described with reference to Figs. 3 and 4. For convenience' sake, the method will be described on the basis of the third embodiment including concepts of all embodiments, and points of the fluid flow corresponding to respective steps will be described using reference numerals.

First, the method will be described on the basis of a supercritical CO₂ cycle (see Fig. 4 with respect to a temperature for each point).

The supercritical CO₂ cycle heats a high-pressure supercritical CO₂ fluid using an S-CO₂ heater 210 of a supercritical CO₂ power generation unit provided in a boiler 110 of a steam power generation unit (fluid heating step, 1). The heated supercritical CO₂ fluid is supplied to a turbine 220 and drives the turbine 220 (turbine driving step, 2).

The supercritical CO₂ fluid passing through the turbine 220 is exchanged with heat by a first high-recuperator 250 to be cooled (first heat exchange step, 2→74). In this case, the supercritical CO₂ fluid having a temperature reaching about 500°C is lowered to have a temperature of about 200°C through the first heat exchange step.

The heat-exchanged supercritical CO₂ fluid by the first high-recuperator 250 is exchanged with heat by a second low-recuperator 252 and is lowered to have a temperature of about 70°C (second heat exchange step, 3→4). The supercritical CO₂ fluid after performing of the second heat exchange step is introduced into an S-CO₂ feed water heater 290 and is cooled by recovering heat of a first feed water heater 132 of the steam power generation unit (recovery cooling step, 4→72). Next, the supercritical CO₂ fluid is cooled to have a temperature equal to or less than 50°C through a precooler 230 (cooling step, 72→5).

The supercritical CO₂ fluid cooled through the cooling step is supplied to a main compressor 240 to be compressed to high pressure (compression step, 5→6), and the compressed supercritical CO₂ fluid is heated to a temperature of about 140°C via the second low-recuperator 252 (third heating step, 6→73). The supercritical CO₂ fluid passing through the second low-recuperator 252 is heated to a temperature of about 550°C via the first high-recuperator 250 (fourth heating step, 9→10), and the supercritical CO₂ fluid after performing of the fourth heating step is circulated back to S-CO₂ heater 210 to be heated to a temperature of about 700°C (circulation step, 10→1).

Meanwhile, between the third heating step and the fourth heating step, the supercritical CO₂ fluid after performing of the third heating step is heated via an S-CO₂ gas cooler 270 for recovering waste heat from exhaust gas discharged from the boiler 110, and then may proceed to the fourth heating step (auxiliary heating step, 73→7). Before the supercritical CO₂ fluid after performing of the second heating step is introduced into the S-CO₂ feed water heater 290, a portion of the supercritical CO₂ fluid to be introduced thereinto is branched and drives a recompressor 222 (recompression step, 4-1→8). As a result, the supercritical CO₂ cycle may have improved efficiency through a regeneration effect. A heat transfer area may not be separately added to an S-CO₂ condenser as a flow rate passing through the recompressor is increased, and thus an S-CO₂ capacity ratio may be increased.

Next, the method will be described on the basis of a steam cycle. The temperature for each point will be described with reference to Fig. 4, and detailed configurations in the boiler previously described in the above embodiments and detailed description of the general fluid flow in the steam cycle will be omitted.

The steam cycle heats outside air used to burn fuel by recovering waste heat from the precooler 230 through the air preheater 160 installed at the precooler 230 of the supercritical CO₂ cycle (preheating step, 43→44). The fuel is injected and burned in the boiler 110 together with the heated outside air (combustion step, 52), and steam is heated with heat generated through the combustion step and drives a plurality of turbines 120, 122, and 124 so as to produce electric power (turbine driving step, 11→17). The combustion gas generated by the boiler 110 is discharged to the outside (exhaust gas discharge step, 42).

However, prior to the exhaust gas discharge step, waste heat may be recovered from the exhaust gas by the S-CO₂ gas cooler 270 (heat recovery step, 71→42). In addition, between the preheating step and the combustion step, the outside air after performing of the preheating step may be additionally heated by an S-CO₂ air heater 280 to be supplied to the boiler 110 (additional heating step, 44→70).

Through such a method, the hybrid power generation system interconnecting the steam cycle and the supercritical CO₂ cycle may be efficiently operated.

As is apparent from the above description, a hybrid power generation system using a supercritical CO₂ cycle according to an embodiment of the present invention has an effect of improving both of power generation efficiencies of a steam cycle and a supercritical CO₂ cycle by interconnecting the steam cycle and the supercritical CO₂ cycle.

In addition, since the two cycles share a boiler, a temperature difference between a high-temperature fluid and a low-temperature fluid in the supercritical CO₂ cycle can be decreased by circulation of a supercritical CO₂ fluid having a high temperature, thereby improving the supercritical CO₂ cycle and a loss in a main compressor.

Furthermore, since the two cycles share the boiler and a supercritical CO₂ heater is operated at a higher temperature than steam, it may be possible to reduce an Exergy loss generated when heat is transferred from combustion gas having a high temperature to a steam pipe having a low temperature in the boiler of the steam cycle.

While the present invention has been described with respect to the specific embodiments, it will be apparent to those skilled in the art that various changes and modifications may be made without departing from the scope of the invention as defined in the following claims.

## Claims

1. A hybrid power generation system using a supercritical CO₂ cycle, comprising a steam power generation unit comprising a plurality of turbines (120)(122)(124) driven with steam heated by a boiler (110) to produce electric power, for producing electric power using a supercritical CO₂ fluid, the hybrid power generation system comprising:
a supercritical CO₂ power generation unit comprising an S-CO₂ heater (210) for heating the supercritical CO₂ fluid, a turbine (220) driven by the supercritical CO₂ fluid, a precooler (230) for lowering a temperature of the supercritical CO₂ fluid passing through the turbine, and a main compressor (240) for pressurizing the supercritical CO₂ fluid, so as to produce electric power, and **characterized in that** the steam power generation unit and the supercritical CO₂ power generation unit share the boiler.

2. The hybrid power generation system according to claim 1, wherein the steam power generation unit further comprises a plurality of feed water heaters (130) for reheating the steam driving the turbines, a plurality of outside air injectors (150)(152) for supplying outside air to the boiler, a gas air heater (GAH) for recovering waste heat from combustion gas discharged after burning by the boiler, and an exhaust gas ejector (154) for discharging exhaust gas passing through the gas air heater.

3. The hybrid power generation system according to claim 2, wherein the supercritical CO₂ power generation unit further comprises a recompressor (222) driven by the supercritical CO₂ fluid branched before introduction into the precooler, a first high-recuperator (250) installed between the turbine and the recompressor, a second low-recuperator (252) installed between the recompressor and the main compressor, and an S-CO₂ gas cooler (270) for recovering waste heat from the exhaust gas between the gas air heater and the exhaust gas ejector.

4. The hybrid power generation system according to any one of the preceding claims, wherein the S-CO₂ heater is installed in the boiler, the boiler further comprises a steam superheater (112) for superheating the steam and a steam reheater (114) for reheating the steam supplied from the turbine, and the S-CO₂ heater (210) is installed in a front end part of the steam superheater and the steam reheater.

5. The hybrid power generation system according to claim 3, wherein the S-CO₂ gas cooler (270) is connected to the second low-recuperator (252) and the first high-recuperator (250), and the supercritical CO₂ fluid is compressed by the main compressor (240), is exchanged with heat by the S-CO₂ gas cooler via the second low-recuperator, and is then introduced into the first high-recuperator.

6. The hybrid power generation system according to any one of the preceding claims 2 - 5, wherein the supercritical CO₂ power generation unit further comprises an air preheater (160) for recovering waste heat from the precooler, and the air preheater is connected to the outside air injectors and the gas air heater.

7. The hybrid power generation system according to claim 6, wherein the supercritical CO₂ power generation unit further comprises an S-CO₂ feed water heater (290) connected to one of the feed water heaters so as to heat the supercritical CO₂ fluid passing through the second low-recuperator using heat recovered from the feed water heater, and the S-CO₂ feed water heater has an outlet end connected to the precooler so that the supercritical CO₂ fluid passing through the S-CO₂ feed water heater is introduced into the precooler.

8. The hybrid power generation system according to claim 6, wherein the supercritical CO₂ power generation unit further comprises an S-CO₂ air heater (280) provided between the gas air heater and the air preheater so as to be connected to the gas air heater and the air preheater, and the S-CO₂ air heater is connected to the first high-recuperator and the second low-recuperator and heats outside air passing through the air preheater.

9. A hybrid power generation method using a supercritical CO₂ cycle, comprising a steam cycle for producing electric power by a steam power generation unit and a supercritical CO₂ cycle for producing electric power by a supercritical CO₂ power generation unit,
wherein the supercritical CO₂ cycle comprises:
performing fluid heating in which a supercritical CO₂ fluid is heated using an S-CO₂ heater (210) of the supercritical CO₂ power generation unit provided in a boiler (110) of the steam power generation unit;
performing turbine driving in which a turbine (220) is driven by the heated supercritical CO₂ fluid;
performing first heat exchange in which the supercritical CO₂ fluid passing through the turbine is exchanged with heat by a first high-recuperator (250);
performing second heat exchange in which the supercritical CO₂ fluid exchanged with heat by the first high-recuperator is exchanged with heat by a second low-recuperator (252);
performing cooling in which the supercritical CO₂ fluid after the performing second heat exchange is cooled by a precooler (230);
performing compression in which the supercritical CO₂ fluid cooled through the performing cooling is supplied to and compressed by a main compressor (240);
performing third heating in which the compressed supercritical CO₂ fluid is heated via the second low-recuperator (252);
performing fourth heating in which the supercritical CO₂ fluid passing through the second low-recuperator is heated via the first high-recuperator (250); and
performing circulation in which the supercritical CO₂ fluid after the performing fourth heating is circulated to the S-CO₂ heater (210).

10. The hybrid power generation method according to claim 9, wherein the supercritical CO₂ cycle further comprises performing recovery cooling, in which the supercritical CO₂ fluid after the performing second heat exchange is introduced into an S-CO₂ feed water heater (290) to be cooled by recovering heat from a feed water heater of the steam power generation unit, between the performing second heat exchange and the performing cooling.

11. The hybrid power generation method according to claim 9 or 10, wherein the supercritical CO₂ cycle further comprises performing auxiliary heating, in which the supercritical CO₂ fluid after the performing third heating is heated via an S-CO₂ gas cooler (270) for recovering waste heat from exhaust gas discharged from the boiler and then proceeds to the performing fourth heating, between the performing third heating and the performing fourth heating.

12. The hybrid power generation method according to claim 10 or 11 when according to claim 10, wherein the supercritical CO₂ cycle further comprises performing recompressor driving, in which a portion of the supercritical CO₂ fluid introduced into the S-CO₂ feed water heater is branched to drive a recompressor (222), between the performing second heating and the performing recovery cooling.

13. The hybrid power generation method according to any one of the preceding claims 9-12, wherein the steam cycle comprises:
performing preheating in which outside air used to burn fuel is heated by recovering waste heat from the precooler (230) through an air preheater installed at the precooler;
performing combustion in which fuel is injected and burned in the boiler;
performing turbine driving in which steam is heated with heat generated through the performing combustion and drives a plurality of turbines; and
performing exhaust gas discharge in which combustion gas generated by the boiler is discharged to the outside.

14. The hybrid power generation method according to claim 13, wherein the steam cycle further comprises performing heat recovery, in which waste heat is recovered from the exhaust gas by the S-CO₂ gas cooler (270), prior to the performing exhaust gas discharge.

15. The hybrid power generation method according to claim 13 or 14, wherein the steam cycle further comprises performing additional heating, in which the outside air after the performing preheating is additionally heated by an S-CO₂ air heater (280), between the performing preheating and the performing combustion.

## Patentansprüche

1. Hybridleistungserzeugungssystem, das einen überkritischen CO₂-Kreislauf verwendet und eine Dampfleistungserzeugungseinheit umfasst, die mehrere Turbinen (120)(122)(124) umfasst, die durch Dampf, der durch einen Heizkessel (110) geheizt wird, angetrieben werden, um elektrische Leistung unter Verwendung eines überkritischen CO₂-Fluids zu erzeugen, wobei das Hybridleistungserzeugungssystem Folgendes umfasst:
eine überkritische CO₂-Leistungserzeugungseinheit, die eine S-CO₂-Heizvorrichtung (210), um das überkritische CO₂-Fluid zu heizen, eine Turbine (220), die durch das überkritische CO₂-Fluid angetrieben wird, einen Vorkühler (230), um eine Temperatur des überkritischen CO₂-Fluids, das durch die Turbine führt, zu senken, und einen Hauptverdichter (240), um das überkritische CO₂-Fluid unter Druck zu setzen, um elektrische Leistung zu erzeugen, umfasst,
und **dadurch gekennzeichnet, dass**
die Dampfleistungserzeugungseinheit und die überkritische CO₂-Leistungserzeugungseinheit den Heizkessel gemeinsam nutzen.

2. Hybridleistungserzeugungssystem nach Anspruch 1, wobei die Dampfleistungserzeugungseinheit ferner mehrere Zuführwasserheizvorrichtungen (130), um den Dampf, der die Turbinen antreibt, wieder zu heizen, mehrere Außenlufteinspritzer (150) (152), um den Heizkessel mit Außenluft zu versorgen, eine Gasluftheizvorrichtung (GAH), um Abwärme aus Verbrennungsgas, das nach dem Verbrennen durch den Heizkessel ausgestoßen wird, zurückzugewinnen, und einen Abgasausstoßer (154), um Abgas, das durch die Gasluftheizvorrichtung führt, auszustoßen, umfasst.

3. Hybridleistungserzeugungssystem nach Anspruch 2, wobei die überkritische CO₂-Leistungserzeugungseinheit ferner einen Rückverdichter (222), der durch das überkritische CO₂-Fluid angetrieben wird, das vor dem Einführen in den Vorkühler abgezweigt wird, einen ersten Starkvorwärmer (250), der zwischen der Turbine und dem Rückverdichter installiert ist, einen zweiten Geringvorwärmer (252), der zwischen dem Rückverdichter und dem Hauptverdichter installiert ist, und einen S-CO₂-Gaskühler (270), um Abwärme aus dem Abgas zwischen der Gasluftheizvorrichtung und dem Abgasausstoßer zurückzugewinnen, umfasst.

4. Hybridleistungserzeugungssystem nach einem der vorhergehenden Ansprüche, wobei die S-CO₂-Heizvorrichtung in dem Heizkessel installiert ist, wobei der Heizkessel ferner einen Dampfüberhitzer (112), um den Dampf zu überheizen, und eine Dampfzwischenheizvorrichtung (114), um den von der Turbine zugeführten Dampf wieder zu heizen, umfasst und die S-CO₂-Heizvorrichtung (210) in einem vorderen Endteil des Dampfüberhitzers und der Dampfzwischenheizvorrichtung installiert ist.

5. Hybridleistungserzeugungssystem nach Anspruch 3, wobei der S-CO₂-Gaskühler (270) mit dem zweiten Geringvorwärmer (252) und dem ersten Starkvorwärmer (250) verbunden ist und das überkritische CO₂-Fluid, das durch den Hauptverdichter (240) komprimiert wird, durch den S-CO₂-Gaskühler über den Geringvorwärmer mit Wärme ausgetauscht wird und dann in den ersten Starkvorwärmer eingeführt wird.

6. Hybridleistungserzeugungssystem nach einem der vorhergehenden Ansprüche 2-5, wobei die überkritische CO₂-Leistungserzeugungseinheit ferner eine Luftvorheizvorrichtung (160) umfasst, um Abwärme von dem Vorkühler zurückzugewinnen, und die Luftvorheizvorrichtung mit den Außenlufteinspritzern und der Gasluftheizvorrichtung verbunden ist.

7. Hybridleistungserzeugungssystem nach Anspruch 6, wobei die überkritische CO₂-Leistungserzeugungseinheit ferner eine S-CO₂-Zuführwasserheizvorrichtung (290) umfasst, die mit einer der Zuführwasserheizvorrichtungen verbunden ist, um das überkritische CO₂-Fluid, das durch den zweiten Geringvorwärmer führt, unter Verwendung von Wärme, die aus der Zuführwasserheizvorrichtung zurückgewonnen wird, zu heizen, und die S-CO₂-Zuführwasserheizvorrichtung ein Auslassende besitzt, das mit dem Vorkühler verbunden ist, so dass das überkritische CO₂-Fluid, das durch die S-CO₂-Zuführwasserheizvorrichtung hindurchführt, in den Vorkühler eingeführt wird.

8. Hybridleistungserzeugungssystem nach Anspruch 6, wobei die überkritische CO₂-Leistungserzeugungseinheit ferner eine S-CO₂-Luftheizvorrichtung (280) umfasst, die zwischen der Gasluftheizvorrichtung und der Luftvorheizvorrichtung so vorgesehen ist, dass sie mit der Gasluftheizvorrichtung und der Luftvorheizvorrichtung verbunden ist, und die S-CO₂-Luftheizvorrichtung mit dem ersten Starkvorwärmer und dem zweiten Geringvorwärmer verbunden ist und Außenluft, die durch die Luftvorheizvorrichtung führt, heizt.

9. Hybridleistungserzeugungsverfahren unter Verwendung eines überkritischen CO₂-Kreislaufs, das einen Dampfkreislauf, um elektrische Leistung durch eine Dampfleistungserzeugungseinheit zu erzeugen, und einen überkritischen CO₂-Kreislauf, um elektrische Leistung durch eine überkritische CO₂-Leistungserzeugungseinheit zu erzeugen, verwendet,
wobei der überkritisch CO₂-Kreislauf umfasst:
Ausführen eines Fluidheizens, in dem ein überkritisches CO₂-Fluid unter Verwendung einer S-CO₂-Heizvorrichtung (210) der überkritischen CO₂-Leistungserzeugungseinheit, die in einem Heizkessel (110) der Dampfleistungserzeugungseinheit vorgesehen ist, geheizt wird,
Ausführen eines Turbinenantreibens, in dem eine Turbine (220) durch das überkritische CO₂-Fluid angetrieben wird;
Ausführen eines ersten Wärmeaustauschens, in dem das überkritische CO₂-Fluid, das durch die Turbine führt, durch einen ersten Starkvorwärmer (250) mit Wärme ausgetauscht wird;
Ausführen eines zweiten Wärmeaustauschens, in dem das überkritische CO₂-Fluid, das durch den ersten Starkvorwärmer mit Wärme ausgetauscht wurde, durch einen zweiten Geringvorwärmer (252) mit Wärme ausgetauscht wird;
Ausführen eines Kühlens, in dem das überkritische CO₂-Fluid nach dem Ausführen des zweiten Wärmeaustauschens durch einen Vorkühler (230) gekühlt wird;
Ausführen einer Kompression, in der das überkritische CO₂-Fluid, das durch das Ausführen des Kühlens gekühlt wurde, an den Hauptverdichter (240) geliefert wird und durch ihn komprimiert wird;
Ausführen eines dritten Heizens, in dem das komprimierte überkritische CO₂-Fluid über den zweiten Geringvorwärmer (252) geheizt wird;
Ausführen eines vierten Heizens, in dem das überkritische CO₂-Fluid, das durch den zweiten Geringvorwärmer führt, über den ersten Starkvorwärmer (250) geheizt wird; und
Ausführen einer Zirkulation, in der das überkritische CO₂-Fluid nach dem Ausführen des vierten Heizens zu der S-CO₂-Heizvorrichtung (210) zirkuliert wird.

10. Hybridleistungserzeugungsverfahren nach Anspruch 9, wobei der überkritische CO₂-Kreislauf ferner umfasst, ein Rückgewinnungskühlen auszuführen, in dem das überkritische CO₂-Fluid nach dem Ausführen des zweiten Wärmeaustauschens zwischen dem Ausführen des zweiten Wärmeaustauschens und dem Ausführen des Kühlens in eine S-CO₂-Zuführwasserheizvorrichtung (290) eingeführt wird, um durch das Zurückgewinnen von Wärme von einer Zuführwasserheizvorrichtung der Dampfleistungserzeugungseinheit gekühlt zu werden.

11. Hybridleistungserzeugungsverfahren nach Anspruch 9 oder 10, wobei der überkritische CO₂-Kreislauf ferner umfasst, ein zusätzliches Heizen auszuführen, in dem das überkritische CO₂-Fluid nach dem Ausführen des dritten Heizens zwischen dem Ausführen des dritten Heizens und dem Ausführen des vierten Heizens über einen S-CO₂-Gaskühler (270) zum Zurückgewinnen von Abwärme aus dem Abgas, das von dem Heizkessel ausgestoßen wird, geheizt wird, und dann zu dem Ausführen des vierten Heizens fortschreitet.

12. Hybridleistungserzeugungsverfahren nach Anspruch 10 oder 11, wenn abhängig von Anspruch 10, wobei der überkritische CO₂-Kreislauf ferner umfasst, zwischen dem zweiten Heizen und dem Ausführen des Wiedergewinnungskühlens das Antreiben eines Rückverdichters, in dem ein Teil des überkritischen CO₂-Fluids, das in die S-CO₂-Wasserheizvorrichtung eingeführt wird, abgezweigt wird, auszuführen, um einen Rückverdichter (222) anzutreiben.

13. Hybridleistungserzeugungsverfahren nach einem der vorhergehenden Ansprüche 9-12, wobei der Dampfkreislauf Folgendes umfasst:
Ausführen eines Vorheizens, in dem Außenluft, die verwendet wird, um Brennstoff zu verbrennen, durch Zurückgewinnen von Abwärme von dem Vorkühler (230) durch ein Luftvorheizvorrichtung, die an dem Vorkühler installiert ist, geheizt wird;
Ausführen einer Verbrennung, in der Brennstoff in den Heizkessel eingeführt wird und in ihm verbrannt wird;
Ausführen eines Turbinenantreibens, in dem Dampf mit Wärme, die durch das Ausführen der Verbrennung erzeugt wird, geheizt wird und mehrere Turbinen antreibt; und
Ausführen eines Abgasausstoßens, in dem ein Verbrennungsgas, das durch den Heizkessel erzeugt wird, nach außen ausgestoßen wird.

14. Hybridleistungserzeugungsverfahren nach Anspruch 13, wobei der Dampfkreislauf ferner umfasst, vor dem Ausführen des Abgasausstoßens eine Wärmerückgewinnung auszuführen, in der Abwärme aus dem Abgas durch den S-CO₂-Gaskühler (270) zurückgewonnen wird.

15. Hybridleistungserzeugungsverfahren nach Anspruch 13 oder 14, wobei der Dampfkreislauf ferner umfasst, zwischen dem Ausführen des Vorheizens und dem Ausführen der Verbrennung ein zusätzliches Heizen auszuführen, in dem die Außenluft nach dem Ausführen des Vorheizens zusätzlich durch eine S-CO₂-Luftheizvorrichtung (280) geheizt wird.

## Revendications

1. Système de génération d'énergie hybride utilisant un cycle CO₂ supercritique, comprenant une unité de génération d'énergie à vapeur comprenant une pluralité de turbines (120)(122)(124), entraînées par la vapeur chauffée par
une chaudière (110) afin de produire une énergie électrique, pour produire une énergie électrique utilisant
un fluide CO₂ supercritique, le système de génération d'énergie comprenant :
une unité de génération d'énergie électrique CO₂ supercritique comprenant un réchauffeur de S-CO₂ (210) pour chauffer le fluide CO₂ supercritique, une turbine (220) entraînée par le fluide CO₂ supercritique, un prérefroidisseur (230) pour abaisser une température du fluide CO₂ supercritique passant à travers la turbine et un compresseur principal (240) pour pressuriser le fluide CO₂ supercritique, de manière à produire une énergie électrique,
et **caractérisé en ce que**
l'unité de génération d'énergie à vapeur et l'unité de génération d'énergie à CO₂ partagent la chaudière.

2. Système de génération d'énergie hybride selon la revendication 1, dans lequel l'unité de génération d'énergie à vapeur comprend en outre une pluralité de chauffe-eaux d'alimentation (130), pour réchauffer la vapeur entraînant les turbines, une pluralité d'injecteurs d'air extérieur (150) (152) pour alimenter de l'air extérieur dans la chaudière, un réchauffeur d'air gaz (GAH) pour récupérer les rejets thermiques du gaz de combustion évacué après avoir été brûlé par la chaudière, et un éjecteur de gaz d'échappement (154) pour évacuer le gaz d'échappement passant à travers le réchauffeur d'air gaz.

3. Système de génération d'énergie hybride selon la revendication 2, dans lequel l'unité de génération d'énergie à CO2 supercritique comprend en outre un recompresseur (222) entraîné par le fluide CO2 supercritique s'embranchant avant l'introduction dans le prérefroidisseur, un premier récupérateur haut (250) installé entre la turbine et le recompresseur, un second récupérateur bas (252) installé entre le recompresseur et le compresseur principal, et un refroidisseur de gaz S-CO₂ (270) pour récupérer les rejets thermiques provenant du gaz d'échappement entre le réchauffeur d'air gaz et l'éjecteur de gaz d'échappement.

4. Système de génération d'énergie hybride selon une quelconque des revendications précédentes, dans lequel le réchauffeur de S-CO₂ est installé dans la chaudière, la chaudière comprend en outre un surchauffeur de vapeur (112) pour surchauffer la vapeur et un réchauffeur de vapeur (114) pour réchauffer la vapeur fournie par la turbine, et le réchauffeur de S-CO₂ (210) est installé dans une partie d'extrémité avant du surchauffeur de vapeur et du réchauffeur de vapeur.

5. Système de génération d'énergie hybride selon la revendication 3, dans lequel le refroidisseur de gaz S-CO₂ (270) est raccordé au second récupérateur bas (252) et au premier récupérateur haut (250), et le fluide de CO₂ supercritique est comprimé par le compresseur principal (240), est échangé thermiquement par le refroidisseur de gaz S-CO₂ via le second récupérateur bas, et est ensuite introduit dans le premier récupérateur haut.

6. Système de génération d'énergie hybride selon une quelconque des revendications précédentes 2-5, dans lequel l'unité de génération d'énergie à CO₂ supercritique comprend un préchauffeur d'air (160) pour récupérer les rejets thermiques provenant du prérefroidisseur, et le préchauffeur d'air est raccordé aux injecteurs d'air extérieurs et au réchauffeur d'air gaz.

7. Système de génération d'énergie hybride selon la revendication 6, dans lequel l'unité de génération d'énergie CO₂ supercritique comprend en outre un chauffe-eau d'alimentation à S-CO₂ (290) raccordé à un des chauffe-eaux d'alimentation de manière à chauffer un fluide CO₂ supercritique passant à travers le second récupérateur bas utilisant la chaleur récupérée du chauffe-eau d'alimentation, et le chauffe-eau d'alimentation à S-CO₂ a une extrémité de sortie raccordée au prérefroidisseur de sorte que le fluide CO₂ supercritique passant à travers le chauffe-eau d'alimentation S-CO₂ soit introduit dans le prérefroidisseur.

8. Système de génération d'énergie hybride selon la revendication 6, dans lequel l'unité de génération d'énergie CO₂ supercritique comprend en outre un réchauffeur d'air S-CO₂ (280) prévu entre le réchauffeur d'air gaz et le préchauffeur d'air de manière à être raccordé au réchauffeur d'air gaz et au préchauffeur d'air, et le réchauffeur d'air S-CO2 est raccordé au premier récupérateur haut et au second récupérateur bas et chauffe l'air extérieur passant à travers le préchauffeur d'air.

9. Procédé de génération d'énergie hybride utilisant un cycle CO₂ supercritique, comprenant un cycle de vapeur pour produire de l'énergie électrique par une unité de génération d'énergie à vapeur et un cycle CO₂ supercritique pour produire de l'énergie électrique par une unité de génération d'énergie CO₂ supercritique, dans lequel le cycle CO₂ supercritique comprend de :
effectuer un chauffage du fluide dans lequel un fluide CO₂ supercritique est chauffé en utilisant une réchauffeur de S-CO₂ (210) de l'unité de génération d'énergie CO₂ supercritique prévu dans une chaudière (110) de l'unité de génération d'énergie à vapeur ;
effectuer un entraînement de turbine dans lequel une turbine (220) est entraînée par le fluide CO₂ supercritique ;
effectuer un premier échange thermique dans lequel le fluide CO₂ supercritique passant à travers la turbine est échangé avec la chaleur par un premier récupérateur haut (250) ;
effectuer un second échange thermique dans lequel le fluide CO₂ supercritique échangé avec la chaleur par le premier récupérateur haut est échangé avec la chaleur par un second récupérateur bas (252) ;
effectuer un refroidissement dans lequel le fluide CO₂ supercritique après l'exécution du second échange thermique est refroidi par un prérefroidisseur (230) ;
effectuer une compression dans laquelle le fluide CO₂ supercritique refroidi par l'exécution du refroidissement est alimenté dans et comprimé par un compresseur principal (240) ;
effectuer un troisième réchauffement dans lequel le fluide CO2 supercritique compressé est chauffé via le second récupérateur bas (252) ;
effectuer un quatrième réchauffement dans lequel le fluide CO₂ supercritique passant à travers le second récupérateur bas est chauffé via le premier récupérateur haut (250) ; et
effectuer une circulation dans laquelle le fluide CO₂ supercritique après l'exécution du quatrième réchauffement en mise en circulation vers le réchauffeur S-CO₂ (210).

10. Procédé de génération d'énergie hybride selon la revendication 9, dans lequel le cycle CO₂ supercritique comprend en outre d'effectuer un refroidissement de récupération, dans lequel le fluide CO₂ supercritique après l'exécution du second échange thermique est introduit dans un chauffe-eau d'alimentation S-CO₂ (290) à refroidir en récupérant la chaleur provenant d'un chauffe-eau d'alimentation de l'unité de génération d'énergie à vapeur, entre l'exécution du second échange thermique et du refroidissement.

11. Procédé de génération d'énergie hybride selon la revendication 9 ou 10, dans lequel le cycle CO₂ supercritique comprend en outre d'effectuer un chauffage auxiliaire, dans lequel le fluide CO₂ supercritique après l'exécution du troisième chauffage est chauffé via un refroidisseur de gaz S-CO2 (270) pour récupérer les rejets thermiques du gaz d'échappement évacués de la chaudière et procède ensuite à l'exécution du quatrième chauffage, entre l'exécution du troisième chauffage et l'exécution du quatrième chauffage.

12. Procédé de génération d'énergie hybride selon la revendication 10 ou 11 en conformité avec la revendication 10, dans lequel le cycle CO₂ supercritique comprend en outre d'effectuer un entraînement de recompresseur, dans lequel une portion du fluide CO₂ supercritique introduit dans le chauffe-eau d'alimentation S-CO₂ est embranché afin d'entraîner un recompresseur (222), entre l'exécution du second chauffage et du refroidissement de récupération.

13. Procédé de génération d'énergie hybride selon une quelconque des revendications précédentes 9-12, dans lequel le cycle de vapeur comprend de :
effectuer un préchauffage dans lequel l'air extérieur utilisé pour brûler du carburant est chauffé en récupérant les rejets thermiques provenant du prérefroidisseur (230) à travers un préchauffeur d'air installé au niveau du prérefroidisseur ;
effectuer une combustion dans laquelle du carburant est injecté et brûlé dans la chaudière ;
effectuer un entrainement de turbine dans lequel de la vapeur est chauffée avec de la chaleur générée par l'exécution d'une combustion et entraîne une pluralité de turbines ; et
effectuer une évacuation de gaz d'échappement dans laquelle du gaz de combustion généré par la chaudière est évacué vers l'extérieur.

14. Procédé de génération d'énergie hybride selon la revendication 13, dans lequel le cycle de vapeur comprend en outre d'effectuer une récupération de chaleur, dans laquelle les rejets thermiques sont récupérés à partir du gaz d'échappement par le refroidisseur de gaz S-CO₂ (270), avant l'exécution de l'évacuation de gaz d'échappement.

15. Procédé de génération d'énergie hybride selon la revendication 13 ou 14, dans lequel le cycle de vapeur comprend en outre d'effectuer un chauffage additionnel, dans lequel l'air extérieur après l'exécution du préchauffage est chauffé additionnement par un réchauffeur d'air S-CO₂ (280), entre l'exécution du préchauffage et de la combustion.
